# EUROPÄISCHE PATENTSCHRIFT

(11) **EP 0 729 886 B1**
(45) Veröffentlichungstag und Bekanntmachung des Hinweises auf die Patenterteilung: **10.06.1998**
(21) Anmeldenummer: 95115013.5
(22) Anmeldetag: 23.09.1995
(51) Int. Cl.: B65B 9/20, B65D 75/44

(54) **Schlauchbeutelmaschine mit einem Seitenfaltenerzeuger**
Tubular bag-making machine with a gusset former
Machine de fabrication de sachets tubulaires avec un dispositif de formation de soufflets

(30) Priorität: 03.03.1995 DE 19507445
(43) Veröffentlichungstag der Anmeldung: 04.09.1996
(73) Patentinhaber: Rovema Verpackungsmaschinen GmbH, 35463 Fernwald (DE)
(72) Erfinder: Hofmann, Peter, D-35444 Biebertal 1 (DE); Baur, Walter, Dr., D-63584 Gründau (DE)

(56) Entgegenhaltungen:
- EP-A- 0 197 875
- EP-A- 0 569 628
- EP-A- 0 616 942
- EP-A- 0 627 355
- FR-A- 2 102 442
- FR-A- 2 332 906
- FR-A- 2 643 340
- US-A- 3 193 982

## Beschreibung

Die Erfindung betrifft eine Schlauchbeutelmaschine mit einem Seitenfaltenerzeuger gemäß dem Oberbegriffs des Anspruchs 1.

Es sind Schlauchbeutelmaschinen mit einem Seitenfaltenerzeuger bekannt, bei denen eine Seitenfalte in einem Folienschlauch durch einen beweglichen Seitenfaltenstecher erzeugt wird. Auch sind gegeneinander bewegliche Seitenfaltenstecher bekannt, die zwei gegenüberliegende Seitenfalten in den Folienschlauch stechen. Derartige Schlauchbeutelmaschinen erzeugen Schlauchbeutel mit einer Seitenfalte oder mit zwei Seitenfalten. Die Schlauchbeutel sind kopfseitig und bodenseitig in Form von Quernähten verschweißt. Die Seitenfalten werden lediglich in den Quernähten eingeschweißt.

Der Nachteil der bekannten Schlauchbeutelmaschinen mit einem Seitenfaltenstecher oder mit zwei Seitenfaltenstechern ist, daß die erzeugten Schlauchbeutel zwar infolge der Seitenfalten relativ stabil gegenüber Deformationen sind, daß aber für viele Einsatzbereiche eine weitergehende Stabilität gefordert wird.

Aus der EP-OS 0 627 355 ist eine kontinuierlich arbeitende Schlauchbeutelmaschine gemäß dem Oberbegriff des Anspruchs 1 bekannt, bei der mittels vier Schweißeinrichtungen vier Ränder eines Folienschlauches verschweißt werden, um Schlauchbeutel mit versteiften Rändern herzustellen.

Aus der FR-OS 2 643 340 ist eine getaktet arbeitende Schlauchbeutelmaschine bekannt, bei der ein Folienschlauch um zwei parallel zueinander ausgerichtete Formelemente geführt wird, zwischen die gegeneinander ausgerichtete Seitenfaltenerzeuger ragen, um eine Seitenfaltung des Folienschlauches zu erreichen. Die Ränder des Folienschlauches, der relativ lose geführt ist, werden mittels gegen die Ränder beweglichen und wieder rückstellbaren Schweißbacken verschweißt.

Der Erfindung liegt die Aufgabe zu Grunde, den technischen Aufwand für die Herstellung kantenverschweißter Schlauchbeutel zu verringern, und dabei die Bewegungsfreiheit des Folienschlauches zu minimieren.

Gelöst ist die Aufgabe gemäß dem kennzeichnenden Teil des Anspruchs 1.

Bei der kontinuierlich arbeitenden Schlauchbeutelmaschine nach Anspruch 1 ist ein mit dem Füllrohr verbundenes, vom Füllrohr weg weisendes, flaches Spreizelement vorgesehen. Das Spreizelement ist als Doppelspreizelement mit einem zwischen die Einzelspreizelemente des Doppelspreizelementes eingreifenden Seitenfaltenerzeuger ausgestaltet. Zusätzlich zu dem Doppelspreizelement ist eine Schweißeinrichtung mit umlaufenden Siegelbacken vorgesehen, die beidseitig gegen den Rand des mit einer Seitenfalte versehenen Folienschlauches wirkt, wobei die Schweißeinrichtung die zwei Ränder des mit einer Seitenfalte versehenen Folienschlauches einklemmt, und wobei das Format des Füllrohres in Folientransportrichtung von einem der Formschulter angepaßten Format an einer Vetiüngung auf ein verkleinertes Format verjüngt ist, das Doppelspreizelement bzw. die Doppelspreizelemente mit dem Teil des Füllrohres verbunden ist bzw. sind, der das verkleinerte Format aufweist, und wobei die Differenz der Füllrohrradien der unterschiedlichen Formate in etwa zwei Drittel der radialen Ausdehnung des Doppelspreizelementes bzw. der 1,5-fachen radialen Ausdehnung eines der beiden Doppelspreizelemente entspricht.

Durch die Verschweißung der Ränder des Folienschlauches wird eine zusätzliche Versteifung der Schlauchbeutel erreicht. Zudem wird die Seitenfalte gegen eine Rückstellung der Seitenfalte geschützt. Dadurch, daß die Schweißeinrichtung die zu verschweißenden Ränder umgibt, wird ein guter Folienlauf trotzt des zusätzlichen Schweißvorganges erreicht. Das Doppelspreizelement ist kompakt und nimmt beide zu verschweißenden Ränder entlang einer Seitenfalte auf, so daß diese im Bereich des Doppelspreizelementes, vor dem Doppelspreizelement, gegen das Doppelspreizelement oder nach dem Doppelspreizelement verschweißt werden können. Der Seitenfaltenerzeuger reicht in das Doppelspreizelement hinein, erzeugt somit die Seitenfalte, und hält die Folie sicher im Doppelspreizelement eingeklemmt, so daß zur Schweißeinrichtung ortsgenau zuverlässig positionierte Ränder zur Verschweißung gelangen. Die umlaufenden Siegelbänder dienen einer guten Wärmeeinbringung.

Der technische Aufwand für die Verschweißung der Kanten der Ränder ist deutlich verringert, da bei der Erfindung nur eine Schweißeinrichtung für zwei Ränder benötigt wird.

Durch die Formatverjüngung und das geometrische Verhältnis der Formate und der Abmessung des Doppelspreizelementes bzw. der Doppelspreizelemente wird der Folienschlauch sehr genau geführt, und die Genauigkeit der verschweißten Ränder ist sehr groß. Die umlaufenden Siegelbänder dienen einer guten Wärmeeinbringung.

Der erzeugte Schlauchbeutel mit der Seitenfalte ist infolge seiner randseitigen Schweißnähte stabiler gegenüber einer Deformation als ein einfacher Schlauchbeutel mit Seitenfalte. Zur Herstellung des Schlauchbeutels ist eine separate Zuführung von Versteifungsmaterial nicht notwendig, das lediglich das ohnehin zugeführte Material des Folienschlauches verschweißt wird. Die erzeugten Schlauchbeutel können relativ schnell durch eine Befüllung belastet werden, da die zum Beispiel noch warmen Schweißnähte an den Rändern von Zugkräften, die parallel zu den Schweißnähten wirken, nicht aufgezogen werden können, und da die Schweißnähte nicht den Anforderungen an eine Dichtigkeit genügen müssen.

An der erfindungsgemäßen Schlauchbeutelmaschine können analog Anspruch 2 zwei Doppelspreizelemente vorgesehen sein, die entgegengesetzte Richtungen vom Füllrohr weg weisen, wobei jedem Doppelspreizelement in Folientransportrichtung eine Schweißeinrichtung nachgeordnet ist. Mit einer derartigen Ausgestaltung der Schlauchbeutelmaschine werden Schlauchbeutel mit zwei randseitigen Schweißnähten erzeugt. Der Einsatz der zwei symmetrisch zur Mittelachse des Füllrohres angeordneten Doppelspreizelemente hat auch zur Folge, daß die Umform- und die Reibungskräfte beidseits des Füllrohres an den Doppelspreizelementen gleich sind, und somit der Folienlauf nicht gestört wird.

Als Schweißeinrichtung zur randseitigen Verschweißung kann gemäß Anspruch 3 auch ein Strahlungsheizer mit einer in Folientransportrichtung nachgeordneten, umlaufenden Verschließeinrichtung vorgesehen sein. Der Strahlungsheizer erwärmt den Bereich der Schweißnaht in ausreichendem Maß und ohne Überhitzung, so daß für die Schweißnahtausbildung lediglich ein Zusammendrücken des erwärmten Bereiches an der nachfolgenden Verschließeinrichtung ausreicht.

Als Strahlungsheizer kann analog Anspruch 4 eine in Folientransportrichtung ausgerichtete Längssiegelbacke verwendet werden.

Ist in die Seitenfalte des Folienschlauches ein Kühlblech eingesteckt, gegen das die Schweißeinrichtung wirkt (Anspruch 5), so können beide randseitige Schweißnähte einer Seitenfalte gegen das Kühlblech geschweißt werden. Das Kühlblech dient dabei lediglich zur Verhinderung einer Vierlagenverschweißung. Die Schweißeinrichtung wirkt beidseitig gegen das Kühlblech. Damit ist ein Schweißdruck aufbringbar. Auf jeder Seite des Kühlblechs wird eine randseitige Schweißnaht erzeugt. Die Folie kann entlang des Kühlbleches gleiten. Eine Anhaftung von aufgeschmolzenem Folienkunststoff am Kühlblech kann dadurch verhindert werden, daß gemäß Anspruch 6 das Kühlblech eine Polytetrafluorethylen enthaltende, äußere Schicht aufweist. Das Kühlblech kann auch der Seitenfaltenerzeuger sein (Anspruch 7), wodurch ein separater Seitenfaltenerzeuger entbehrlich wird. Ist aber trotzdem ein dem Doppelspreizelement in Folientransportrichtung voranstehender Seitenfaltenerzeuger vorgesehen (Anspruch 8), so wird der Folienlauf weiter stabilisiert.

Da erfindungsgmäß das Format des Füllrohres in Folientransportrichtung von einem der Formschulter angepaßten Format an einer Verjüngung auf ein verkleinertes Format verjüngt ist, wobei das Doppelspreizelement bzw. die Doppelspreizelemente mit dem Teil des Füllrohres verbunden ist bzw. sind, der das verkleinerte Format aufweist und wobei die Differenz der Füllrohrradien der unterschiedlichen Formate in etwa zwei Drittel der radialen Ausdehnung des Doppelspreizelementes bzw. der 1,5-fachen radialen Ausdehnung eines der beiden Doppelspreizelemente entspricht, ist der Folienschlauch entlang dem Füllrohr in einem etwa gleichbleibenden Spreizungszustand. Im Verlauf des Füllrohres wird der Folienschlauch vom größeren Format auf das kleinere Format transportiert. Das Doppelspreizelement bzw. die Doppelspreizelemente ist bzw. sind am kleineren Format vorgesehen und erstrecken sich ungefähr so weit radial nach außen, daß sie die Formatdifferenz ausgleichen.

Da erfindungsgemäß der Folienabzug kontinuierlich angetrieben ist, kann die Wärmeeinstrahlung bzw. die Wärmeeinleitung an der Schweißeinrichtung mit konstanter Leistung erfolgen, ohne daß sich die Schmelzwirkung in der Folie ändert. Abzugsgeschwindigkeit, Erwärmungsstrecke, Strahlungsleistung und Abkühlverhalten der Folie können hierbei besonders gut aufeinander abgestimmt werden. Gleichartige Schweißbedingungen sind dabei vor allen dann gegeben, wenn die Leistung der Schweißeinrichtung proportional der Umlaufgeschwindigkeit des Folienabzugs ist.

Die gleichzeitige, getrennte Verschweißung der beiden aufeinander liegenden, sich flächig berührenden Ränder einer Seitenfalte ist ohne ein Trennmittel und ohne ein Kühlblech möglich, da der Folienabzug kontinuierlich erfolgt, wobei die Heiztemperatur der Schweißeinrichtung der Folienstärke und der Folienabzugsgeschwindigkeit derart angepaßt ist, daß jeweils nur die zwei aufeinanderliegenden Folienlagen, die an einer Schweißfläche der Schweißeinrichtung anliegen, miteinander verschweißt werden. Hierbei ist auch eine besonders hohe Maschinenleistung erreichbar, da die Abkühlzeit der mit minimaler Wärmemenge versorgten Schweißnähte ebenfalls minimal ist.

Die Steifigkeit des Schlauchbeutels wird weiter erhöht, wenn an beiden parallel zur Längsnaht verlaufenden Seitenfalten jeweils die beiden Ränder einer Seitenfalte mit einer Schweißnaht versehen sind.

Verläuft die Längsnaht in einer randseitigen Schweißnaht so ergibt sich der Vorteil, daß lediglich ein Verschweißvorgang ausreicht, um sowohl die Längsnaht, als auch die randseitige Schweißnaht zur Beutelversteifung zu erzeugen. Die Längsnaht kann dabei als Flossennaht, Überlappungsnaht oder als Naht, bei der Innenflächen der Folie gegeneinander geschweißt werden, ausgeführt sein.

Die Stabilität des Schlauchbeutels wird weiter erhöht und eine Standfähigkeit wird erreicht, wenn der Schlauchbeutel als Standbeutel mit einem Standboden ausgebildet ist.

Im folgenden wird die erfindungsgemäße Schlauchbeutelmaschine und mögliche Schlauchbeutel anhand von Ausführungsbeispiele darstellenden Figuren näher beschrieben. Es zeigt:
- Figur 1: in einer perspektivischen Darstellung einen Schlauchbeutel mit zwei Seitenfalten und mit an jeweils den beiden Rändern der beiden, parallel zu der mittig angeordneten Längsnaht verlaufenden Schweißnähte;
- Figur 2: in einem Schnitt entlang AA den Schlauchbeutel der Figur 1;
- Figur 3: in einer perspektivischen Darstellung einen standfähigen Schlauchbeutel mit Seitenfalten und randseitigen Schweißnähten;
- Figur 4: in einem Horizontalschnitt ein Füllrohr mit einem Folienschlauch einer vertikalen Schlauchbeutelmaschine, mit zwei Doppelspreizelementen, sowie mit jeweils einem in ein Doppelspreizelement eingreifenden Seitenfaltenerzeuger zur Herstellung eines flachen Schlauchbeutels entsprechend Figur 1 oder Figur 3;
- Figur 5: in einem Horizontalschnitt den Gegenstand der Figur 4, jedoch ohne Doppelspreizelemente und ohne eingreifende Seitenfaltenerzeuger zur Veranschaulichung des erfindungsgemäßen Verfahrens;
- Figur 6: in einer Seitenansicht das Prinzip einer Schlauchbeutelmaschine zur Erzeugung eines Schlauchbeutels analog Figur 1 mit einer Formschulter zur Umformung einer ebenen Folienbahn zu einem Folienschlauch, einem verjüngten Füllrohr, zwei flachen Doppelspreizelementen, die in einer Vertikalebene mit den Siegelflächen von geschlossenen, umlaufenden Backen einer Querschweißeinrichtung liegen, sowie mit gegen die ausgelenkten Schlauchränder gerichteten umlaufenden Heißsiegelbänder, sowie
- Figur 7: in einer Seitenansicht die um einen rechten Winkel in der Horizontalebene gedrehte Schlauchbeutelmaschine der Figur 6.

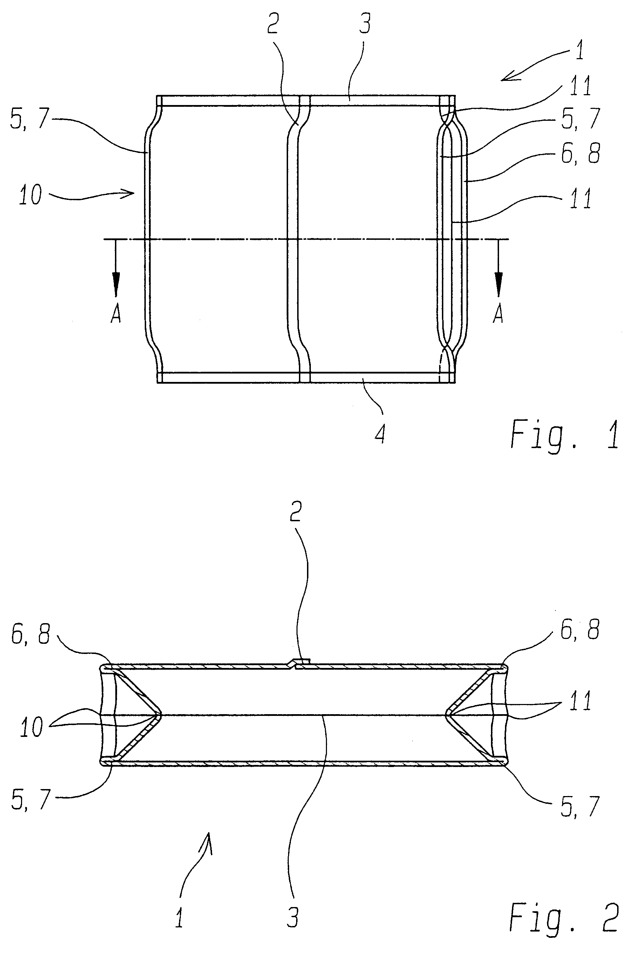

Ein Schlauchbeutel 1 mit Seitenfalten 10, 11 hat eine Längsnaht 2 und senkrecht zu der Längsnaht 2 und parallel zueinander verlaufende, den Schlauchbeutel 1 kopfseitig und bodenseitig verschließende Quernähte 3, 4 (Figur 1, Figur 2). An jeweils beiden parallel zur Längsnaht 2 verlaufenden Rändern 5, 6 einer Seitenfalte 10, 11 des Schlauchbeutels 1 sind Schweißnähte 7, 8 vorgesehen, die einem auf der bodenseitigen Quernaht 4 aufgestellten Schlauchbeutel 1 eine zusätzliche Steifigkeit gegenüber einem Einknicken verleihen. Die Längsnaht 2 verläuft mittig zwischen den Rändern 5 bzw. 6 des Schlauchbeutels 1.

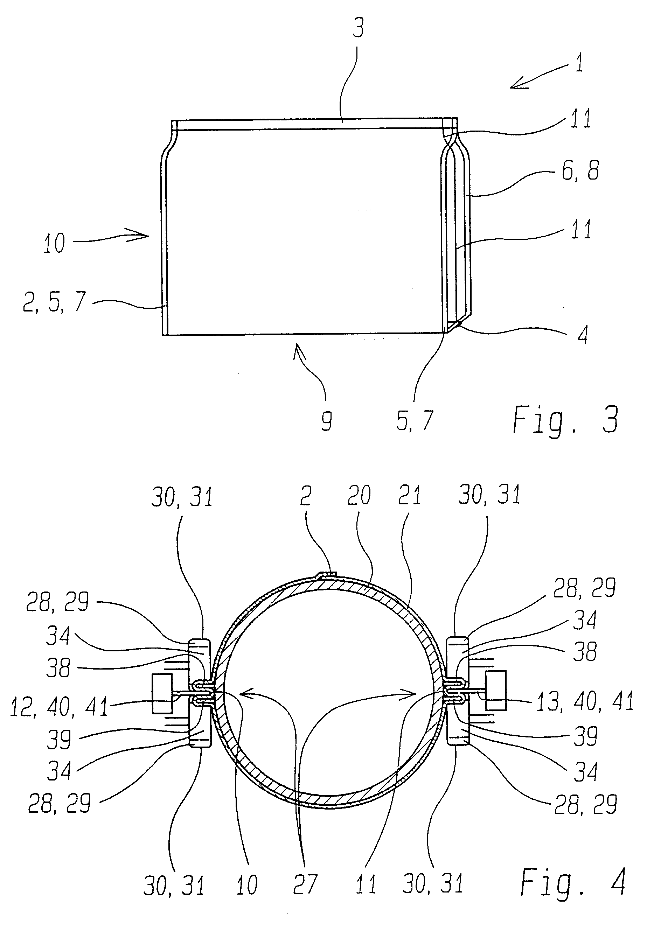

In einem anderen Ausführungsbeispiel (Figur 3) verläuft die Längsnaht 2 in einer randseitigen Schweißnaht 7. Hier sind die Innenflächen der Folie entlang des Randes 5 miteinander verschweißt. Dieser, an einer vertikalen Schlauchbeutelmaschine hergestellte, mit einem Standboden 9 ausgestaltete Schlauchbeutel 1 hat einen minimalen Folienbedarf. An beiden Seitenfalten 10, 11 sind jeweils zwei Schweißnähte 7, 8 vorgesehen. Der Betrag der Breite einer Schweißnaht 7, 8 entspricht einem Bruchteil der Breite einer Seitenfalte 10, 11. Zwecks einer weiteren Versteifung könnte an den Schweißnähten 7, 8 zusätzlich jeweils ein Folienstreifen aus verschweißbarem Kunststoff eingeschweißt werden.

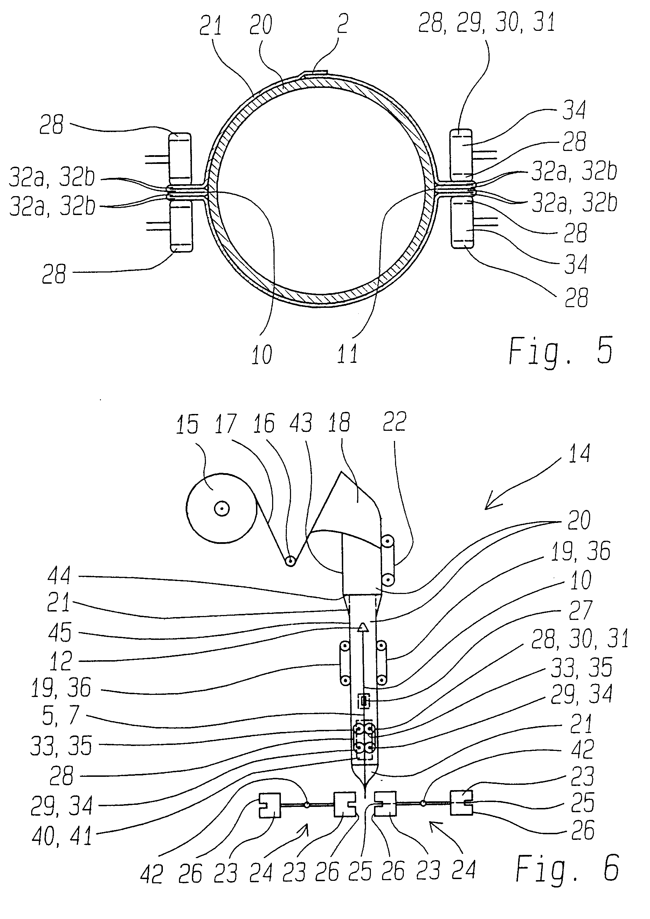

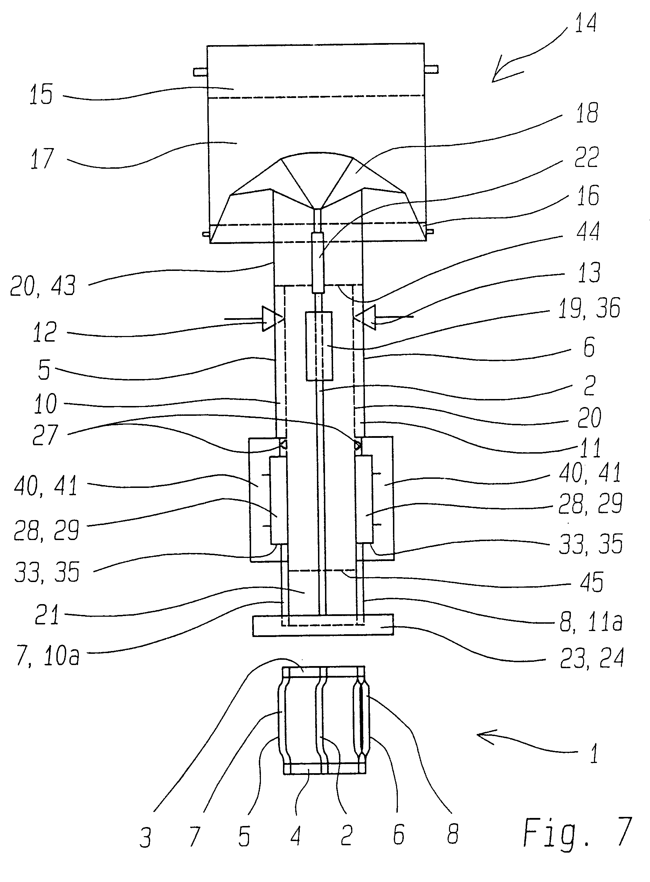

Die Schlauchbeutelmaschine 14 (Figur 6, Figur 7) zur Herstellung von Schlauchbeuteln 1 hat eine Vorratsrolle 15 und Umlenkrollen (schematisiert durch eine Umlenkrolle 16) zur Zuführung einer ebene Folienbahn 17 zu einer Formschulter 18. Ein Folienabzug 19 transportiert die Folienbahn 17. Ein Füllrohr 20 nimmt die zu einem Folienschlauch 21 umgeformte Folienbahn 17 auf. Durch das Füllrohr 20 erfolgt die Befüllung der Schlauchbeutel 1. Die Seitenfaltenerzeuger 12, 13 erzeugen die Seitenfalten 10, 11. Mittels einer Längsschweißeinrichtung 22 wird die Längsnaht 2 des Folienschlauches 21 gebildet. Die Quernähte 3, 4 der flachen Schlauchbeutel 1 werden mit umlaufenden Backen 23 einer Querschweißeinrichtung 24 erzeugt und mit Schneidmessern 25 als Trenneinrichtung vom Folienschlauch 21 getrennt.

Parallel zu den Siegelflächen 26 der Backen 23 ausgerichtet und in einer Ebene mit den Siegelflächen 26 der geschlossenen Backen 23 sind mit dem Füllrohr 20 verbundene, radial vom runden Füllrohr 20 weg weisende, flache Doppelspreizelemente 27 vorgesehen. Die Doppelspreizelemente 27 lenken die Ränder 5, 6 des Folienschlauches 21 aus und erzeugen schmalere Seitenfalten 10a, 11a. Auf diese Ränder 5, 6 wirken umlaufende Siegelbänder 28, um die Ränder 5, 6 zu verschweißen.

Als Schweißeinrichtung 29 fungieren zwei Paare gegenläufiger, die Schweißnähte 7, 8 jeweils zwischen ihren Mantelflächen 33 einklemmende Siegelbänder 28. Die Rollen 34 der Siegelbänder 28 sind mit einer Umlaufgeschwindigkeit angetrieben, die der Abzugsgeschwindigkeit des Folienschlauches 21 durch den Folienabzug 19 entspricht. Die Mantelflächen 33 der Siegelbänder 28 sind mit einer Polytetrafluorethy enthaltenden Schicht 35 versehen, um ein Anhaften des aufgeschmolzenen Folienkunststoffes an den Mantelflächen 33 zu verhindern.

Der Folienabzug 19 weist entgegengesetzt umlaufende Abzugsriemen 36 auf, die um 90 Grad gegenüber den Doppelspreizelementen 27 am Füllrohr versetzt sind.

Die Spreizelemente zur Erzeugung eines Schlauchbeutels 1 analog Figur 1 sind als Doppelspreizelemente 27 (Figur 4) mit jeweils einem zwischen die Einzelspreizelemente 38, 39 jedes Doppelspreizelementes 27 eingreifenden, als Kühlblech 40 ausgestaltetem Seitenfaltenerzeuger 41 ausgestaltet. Das Kühlblech 40 weist eine Polytetrafluorethylen 30 enthaltende Schicht 31 auf, um ein Anhaften von aufgeschmolzenem Kunststoff am Kühlblech 40 zu vermeiden.

Der Betrieb der Schlauchbeutelmaschine 14 erfolgt kontinuierlich. Dabei wird der Folienabzug 19 ebenso kontinuierlich betrieben wie der Umlauf der Backen 23 um ihre Achsen 42. Es ist die Heizleistung der Siegelbänder 28 proportional der Umlaufgeschwindigkeit des Folienabzugs 19, so daß die in die Schweißnähte 7, 8 eingebrachte Wärmemenge unabhängig von der Maschinenleistung ist.

Bei dem Ausführungsbeispiel nach Figur 5 entfällt das Kühlblech 40. Hier ist die Heizleistung der Schweißeinrichtung 29 der Folienabzugsgeschwindigkeit derart angepaßt, daß jeweils nur zwei aufeinanderliegende Folienlagen 32a, 32b, die an einer Schweißfläche eines Siegelbandes 28 anliegen, miteinander verschweißt werden.

Um die radiale Spannung des Folienschlauches 21 in etwa konstant zu halten, ist das Format des Füllrohres 20 in Folientransportrichtung von einem der Formschulter 18 angepaßten Format 43 ab einer Verjüngung 44 auf ein verkleinertes Format 45 verjüngt, wobei die Doppelspreizelemente 27 mit dem Teil des Füllrohres 20 verbunden sind, der das verkleinerte Format 45 aufweist, und wobei die Differenz der Füllrohrradien der unterschiedlichsten Formate 43, 45 der 1,5-fachen radialen Ausdehnung eines Doppelspreizelementes 27 entspricht.

## Patentansprüche

1. Schlauchbeutelmaschine mit einer Vorratsrolle und Umlenkrollen entlang des Führungswegs einer ebenen Folienbahn (17) zu einer Formschulter (18), einem kontinuierlich angetriebenen Folienabzug (19) zum Transport der Folienbahn (17), einem Füllrohr (20) zur Aufnahme der zu einem Folienschlauch (21) umgeformten Folienbahn (17), einer Längsschweißeinrichtung (22) zur Erzeugung einer Längsnaht (2) am Folienschlauch (21), Backen einer Querschweißeinrichtung (24) zur Erzeugung von Quernähten, mit einer Trenneintichtung zur Durchtrennung des Folienschlauches (21), mindestens einem mit dem Füllrohr (20) veibundenen, vom Füllrohr (20) weg weisenden flachen Spreizelement sowie einer Schweißeinrichtung (29) mit zwei gegenläufigen, um Rollen (34) umlaufenden Siegelbändern (28) in Folientransportrichtung nach dem Spreizelement, dadurch gekennzeichnet, daß ein parallel zu den Backen ausgerichteter Seitenfaltenerzeuger (41) vorgesehen ist, daß das mindestens eine Spreizelement als Doppelspreizelement (27) mit dem zwischen die Spreizelemente (38, 39) des Doppelspreizelementes (27) eingreifenden Seitenfaltenerzeuger (41) ausgestaltet ist, daß eine einzige Schweißeinrichtung (29) vorgesehen ist, die beidseitig gegen zwei Ränder (5, 6) des mit einer Seitenfalte (10, 10a, 11, 11a) versehenen Folienschlauches (21) wirkt, wobei die Schweißeinrichtung (29) die zwei Ränder (5, 6) des mit einer Seitenfalte (10, 10a, 11, 11a) versehenen Folienschlauches (21) einklemmt, daß das Format des Füllrohres (20) in Folientransportrichtung von einem der Formschulter (18) angepaßten Format (43) an einer Verjüngung (44) auf ein verkleinertes Format (45) verjüngt ist, daß das Doppelspreizelement (27) bzw. die Doppelspreizelemente (27) mit dem Teil des Füllrohres (20) verbunden ist bzw. sind, der das verkleinerte Format (45) aufweist, und daß die Differenz der Füllrohrradien der verschiedenen Formate (43, 45) in etwa zwei Drittel der radialen Ausdehnung des Doppelspreizelementes (27) bzw. der 1,5-fachen radialen Ausdehnung eines der beiden Doppelspreizelemente (27) entspricht.

2. Schlauchbeutelmaschine nach Anspruch 1, dadurch gekennzeichnet, daß zwei Doppelspreizelemente (27) vorgesehen sind, die in entgegengesetzte Richtungen vom Füllrohr (29) weg weisen, und daß jedem Doppelspreizelement (27) in Folientransportrichtung eine Schweißeinrichtung (29) nachgeordnet ist.

3. Schlauchbeutelmaschine nach Anspruch 1 oder Anspruch 2, dadurch gekennzeichnet, daß als Schweißeinrichtung ein Strahlungsheizer mit einer in Folientransportrichtung nachgeordneten, umlaufenden Verschließeinrichtung vorgesehen ist.

4. Schlauchbeutelmaschine nach Anspruch 3, dadurch gekennzeichnet, daß der Strahlungsheizer eine in Folientransportrichtung ausgerichtete Längssiegelbacke ist.

5. Schlauchbeutelmaschine nach Anspruch 3 oder Anspruch 4, dadurch gekennzeichnet, daß in die Seitenfalte (10, 10a, 11, 11a) des Folienschlauches (21) ein Kühlblech (40) eingesteckt ist, gegen das die Schweißeinrichtung (29) wirkt.

6. Schlauchbeutelmaschine nach Anspruch 5, dadurch gekennzeichnet, daß das Kühlblech (49) eine Polytetrafluorethylen (30) enthaltende äußere Schicht (31) aufweist.

7. Schlauchbeutelmaschine nach Anspruch 5 oder Anspruch 6, dadurch gekennzeichnet, daß das Kühlblech (40) der Seitenfaltenerzeuger (41) ist.

8. Schlauchbeutelmaschine nach Anspruch 1 oder Anspruch 7, dadurch gekennzeichnet, daß zusätzlich ein dem Doppelspreizelement (27) in Folientransportrichtung voranstehender Seitenfaltenerzeuger (12, 13) vorgesehen ist.

## Claims

1. A bag-producing machine with a delivery roller and reversing rollers along the guide path of a flat foil strip (17) to a shaping shoulder (18), a continuously driven foil draw-off means (19) for conveying the foil strip (17), a filling tube (20) for receiving the foil strip (17) shaped to form a foil tube (21), a longitudinal welding device (22) for producing a longitudinal seam (2) on the foil tube (21), jaws of a transverse welding device (24) for producing transverse seams, with a separating device for severing the foil tube (21), a flat spreading element connected to the filling tube (20) and directed away from the filling tube (20), as well as a welding device (29) with two sealing strips (28) circulating about rollers (34) in opposite directions downstream of the spreading element in the conveying direction of the foil, **characterized in that** a lateral-fold producing means (41) orientated parallel to the jaws is provided, the spreading element is designed as a double spreading element (27) with the lateral-fold-producing means (41) engaging between the spreading elements (38, 39) of the double spreading element (27), a single welding device (29) is provided which acts on both sides against two edges (5, 6) of the foil tube (21) provided with a lateral fold (10, 10a, 11, 11a), wherein the welding device (29) clamps the two edges (5, 6) of the foil tube (21) provided with a lateral fold (10, 10a, 11, 11a), the size of the filling tube (20) in the conveying direction of the foil is inwardly tapered from a size (43) adapted to the shaping shoulder (18) on an inward taper (44) to a reduced size (45), the double spreading element (27) or the double spreading elements (27) is or are connected to the part of the filling tube (20) which has the reduced size (45), and the difference between the filling-tube radii of the most widely differing sizes (43, 45) corresponds [to] approximately two thirds of the radial extension of the double spreading element (27) or 1·5 times the radial extension of one of the two double spreading elements (27).

2. A bag-producing machine according to Claim 1, **characterized in that** two double spreading elements (27) are provided which are directed away from the filling tube (29) [*sic - recte* (20)] in opposite directions, and a welding device (29) is arranged down-stream of each double spreading element (27) in the conveying direction of the foil.

3. A bag-producing machine according to Claim 1 or Claim 2, **characterized in that** the welding device is in the form of a radiation heater with a rotating closure device arranged downstream in the conveying direction of the foil.

4. A bag-producing machine according to Claim 3, **characterized in that** the radiation heater is a longitudinal sealing jaw orientated in the conveying direction of the foil.

5. A bag-producing machine according to Claim 3 or Claim 4, **characterized in that** a cooling plate (40), against which the welding device (29) acts, is inserted in the lateral fold (10, 10a, 11, 11a) of the foil tube (21).

6. A bag-producing machine according to Claim 5, **characterized in that** the cooling plate (40) has an outer layer (31) containing polytetrafluoroethylene (30).

7. A bag-producing machine according to Claim 5 or Claim 6, **characterized in that** the cooling plate (40) is the lateral-fold producing means (41).

8. A bag-producing machine according to Claim 1 or Claim 7, **characterized in that** a lateral-fold-producing means (12, 13) projecting forwards beyond the double spreading element (27) in the conveying direction of the foil is additionally provided.

## Revendications

1. Machine à fabriquer des sachets à partir d'un tuyau comportant un rouleau de stockage et des rouleaux de renvoi le long du chemin de guidage d'une bande de feuille plane (17) à un épaulement de formage (18), un dispositif d'extraction de feuille (19) entraîné en continu destiné à assurer le transport de la bande de feuille (17), un tube de remplissage (20) destiné à recevoir la bande de feuille (17) transformée en un tuyau de feuille (21), un dispositif de soudage longitudinal (22) conçu pour produire un cordon longitudinal (2) sur le tuyau de feuille (21), des mâchoires appartenant à un dispositif de soudage transversal (24) pour produire des cordons transversaux avec un dispositif de séparation destiné à découper le tuyau en feuille (21), un élément d'écartement plat, relié au tube de remplissage (20) et tourné de façon à s'écarter de celui-ci, ainsi qu'un dispositif de soudage (29) comportant deux bandes de scellage (28) défilant à contresens autour de rouleaux (34) dans le sens du déplacement de la feuille vers l'element d'écartement, caractérisée en ce qu'il est prévu un générateur de plis latéraux (41), que l'élément d'écartement est configuré en élément d'écartement double (27) avec le générateur de plis latéraux (41) passant entre les éléments d'écartement (38, 39) de l'élément d'écartement double (27), qu'il est prévu un seul dispositif de soudage (29) qui agit de part et d'autre contre deux bords (5,6) du tuyau en feuille (21) pourvu d'un pli latéral (10 , 10a, 11, 11a), le dispositif de soudage (29) serrant les deux bords (5,6) du tuyau en feuille (21) pourvu d'un pli latéral (10, 10a, 11, 11a), que le format du tube de remplissage (20) va en s'effilant dans la direction de transport de la feuille, depuis un format (43) adapté à l'épaulement de formage (18), en passant par un point d'effilement (44) et en atteignant un format (45) diminué, en ce que l'élément d' écartement double (27), respectivement les éléments d'écartement double (27), est, respectivement sont, relié(s) à la partie du tube de remplissage (20) qui présente le format (45) diminué, et en ce que la différence entre les rayons de tube de remplissage des différents formats (43, 45) correspond à peu près à deux tiers de l'étendue radiale de l'élément d'écartement double (27), respectivement à 1,5 fois l'étendue radiale de l'un des deux éléments d'écartement double (27).

2. Machine à fabriquer des sachets à partir d'un tuyau selon la revendication 1, caractérisée en ce que sont prévus deux éléments d'écartement double (27) qui sont tournés en s'écartant, dans des directions opposées, du tube de remplissage (20), et en ce que, en aval de chaque élément d'écartement double (27), dans la direction de transport de la feuille, est disposé un dispositif de soudage (29).

3. Machine à fabriquer des sachets à partir d'un tuyau selon la revendication 1 ou 2, caractérisée en ce qu'est prévu, comme dispositif de soudage, un élément chauffant par rayonnement, équipé, d'un dispositif de fermeture soumis à un mouvement de circulation, disposé en aval dans la direction de transport de la feuille.

4. Machine à fabriquer des sachets à partir d'un tuyau selon la revendication 3, caractérisée en ce que l'élément chauffant par rayonnement est une mâchoire de scellage longitudinal, orientée dans la direction de transport de la feuille.

5. Machine à fabriquer des sachets à partir d'un tuyau selon la revendication 3 ou 4, caractérisée en ce que dans les plis latéraux (10, 10a, 11, 11a) du tuyau en feuille (21) est enfilée une tôle de refroidissement (40) contre laquelle agit le dispositif de soudage (29).

6. Machine à fabriquer des sachets à partir d'un tuyau selon la revendication 5, caractérisée en ce que la tôle de refroidissement (40) présente une couche extérieure (31) contenant du polytétrafluoroéthylène (30).

7. Machine à fabriquer des sachets à partir d'un tuyau selon la revendication 5 ou 6, caractérisée en ce que la tôle de refroidissement (40) constitue le générateur de pli latéral (41).

8. Machine à fabriquer des sachets à partir d'un tuyau selon la revendication 1 ou 7, caractérisée en ce qu' en plus est prévu un générateur d'appui latéral (12, 13) placé devant l'élément d'écartement double (27) dans la direction de transport de la feuille.
